**Europäisches Patentamt**

**European Patent Office**

**Office européen des brevets**

(19)

(11) Veröffentlichungsnummer : **0 436 941 B1**

(12) ## EUROPÄISCHE PATENTSCHRIFT

(45) Veröffentlichungstag der Patentschrift :
**13.04.94 Patentblatt 94/15**

(51) Int. Cl.$^5$ : **C09D 175/04,** C09D 5/02

(21) Anmeldenummer : **90125657.8**

(22) Anmeldetag : **28.12.90**

(54) **Wässrige Überzugsmasse, deren Herstellung und Verwendung.**

(30) Priorität : **12.01.90 DE 4000748**

(43) Veröffentlichungstag der Anmeldung :
**17.07.91 Patentblatt 91/29**

(45) Bekanntmachung des Hinweises auf die
Patenterteilung :
**13.04.94 Patentblatt 94/15**

(84) Benannte Vertragsstaaten :
**AT BE CH DE DK ES FR GB GR IT LI NL SE**

(56) Entgegenhaltungen :
**EP-A- 0 148 970**
**US-A- 4 183 836**

(73) Patentinhaber : **HOECHST
AKTIENGESELLSCHAFT
D-65926 Frankfurt (DE)**

(72) Erfinder : **Schwab, Michael, Dr. Dipl.-Chem.
Jahnstrasse 33-35
W-6272 Niedernhausen-Oberjosbach (DE)**
Erfinder : **Kubillus, Uwe, Dr. Dipl.-Chem.
Scharper Strasse 11
W-6200 Wiesbaden (DE)**

## Beschreibung

Aus der EP-OS 278.394 sind wasserverdünnbare Überzugsmittel auf Basis von wäßrigen Polyurethandispersionen zur Herstellung von Füllern bekannt. Als längerkettige Polyole zur Herstellung des Polyurethanharzes werden dabei Polyetherpolyole mit einer Funktionalität von mindestens 3 eingesetzt. Die danach erhältlichen Dispersionen werden bevorzugt zur Verbesserung der Gebrauchseigenschaften von Polyester/Melaminharzmischungen verwendet.

Die DE-Offenlegungsschrift 3.545.618 betrifft demgegenüber wasserverdünnbare Überzugsmittel auf der Basis von wäßrigen Polyurethandispersionen zur Herstellung der Basisschicht einer mehrschichtigen Deckschicht. Zur Herstellung des Polyurethanharzes werden dabei NCO-Gruppen enthaltende, ionische Präpolymere mit mindestens drei Hydroxylgruppen enthaltenden Polyolen umgesetzt, die dabei eine Kettenverlängerung sowie gegebenenfalls eine Kettenverzweigung bewirken. Hinweise auf andere Einsatzgebiete als für Basisschichten finden sich in dieser Druckschrift nicht.

Die Erfindung betrifft nun eine wäßrige Überzugsmasse zur Herstellung von Grundierungen oder von Füller-Beschichtungen, die mindestens ein wasserdispergierbares Bindemittelharz, sowie Vernetzungsmittel und gegebenenfalls übliche Additive enthält, dadurch gekennzeichnet, daß das wasserdispergierbare Bindemittelharz zumindest teilweise ein Polyurethanharz ist, das Bausteine enthält, die sich ableiten von

(A) Polyisocyanaten,
(B) Polyolen mit einem mittleren Molekulargewicht $\overline{M}_n$ von mindestens 400,
(C) gegebenenfalls niedermolekularen Polyolen,
(D) Verbindungen, die mindestens zwei gegenüber Isocyanatgruppen reaktive Gruppen und mindestens eine zur Anionenbildung befähigte Gruppe aufweisen,
(E) Polyolen, die gegenüber Isocyanatgruppen keine weiteren reaktiven Gruppen tragen, wobei sich diese Bausteine (E) jeweils am Kettenende des Polyurethanharzes befinden, gegebenenfalls
(F) Verbindungen, die monofunktionell sind oder aktiven Wasserstoff unterschiedlicher Reaktivität enthalten und von (E) verschieden sind, wobei sich diese Bausteine (F) ebenfalls am Kettenende des Polyurethanharzes befinden und gegebenenfalls
(G) Verbindungen, die von (B), (C), (D), (E) und (F) verschieden sind und mindestens zwei, mit NCO-Gruppen reaktive Gruppen enthalten.

Weiterhin bezieht sich die Erfindung auf ein Verfahren zur Herstellung dieser Überzugsmasse sowie deren Verwendung als Grundierungsmittel oder als Füller.

Als Füller bzw. Füllerschicht ist hier die Schicht zwischen Grundierung und Decklack, insbesondere bei Fahrzeugkarrosserien oder Teilen davon, zu verstehen, die einerseits zum Ausgleich von Unregelmäßigkeiten in der Grundierung, wodurch ein einwandfreies Aussehen des Decklackes gewährleistet werden soll, und andererseits zur Verbesserung des Steinschlagschutzes der Gesamtlackierung dient. Durch ein plastisches Verhalten soll diese Schicht ein Durchschlagen der Streusplittpartikel, u.ä., wie sie von fremden Fahrzeugen oder auch vom eigenen Fahrzeug gegen die Lackierung geschleudert werden, verhindern. Auf der anderen Seite müssen die Füllerzusammensetzungen relativ harte Filme liefern, um die Naßschleifbarkeit der Lackierung zu ermöglichen, ohne daß sich dabei das Schleifpapier zusetzt.

Das erfindungsgemäße Polyurethanharz besitzt im allgemeinen ein mittleres Molekulargewicht $\overline{M}_n$ (aus der Stöchiometrie des Ausgangsmaterials berechnet) von 1600 bis 50000, vorzugsweise 1600 bis 10000 und insbesondere 2000 bis 6000, eine Säurezahl von 10 bis 80, vorzugsweise 25 bis 60 und eine Hydroxylzahl von 30 bis 200, vorzugsweise 50 bis 100. Es ist zumindest im alkalischen Milieu wasserdispergierbar und bei niedrigen Molekulargewichten unter diesen Bedingungen häufig sogar wasserlöslich. Im allgemeinen sind die Molekülketten dieses Polyurethanharzes überwiegend linear aufgebaut, jedoch kann in manchen Fällen ein geringfügiger Verzweigungsgrad von vorzugsweise bis zu 30 %, insbesondere bis zu 10 % vorhanden sein. Der Gelanteil liegt im allgemeinen bei kleiner als 5 Gew.-%, vorzugsweise kleiner als 1 Gew.-%. Im statistischen Mittel enthält jede Polymerkette vorzugsweise mindestens zwei, insbesondere 4 bis 6 Gruppen mit aktivem Wasserstoff, wie Amino- und/oder OH-Gruppen.

Bei den Polyisocyanaten, vorzugsweise Diisocyanaten (A) handelt es sich um die auf dem Polyurethan- bzw. Lackgebiet bekannten Verbindungen, wie aliphatische, cycloaliphatische oder aromatische Diisocyanate. Diese besitzen vorzugsweise die Formel $Q(NCO)_2$, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'- oder 2,4' .Diisocyanatodiphenylmethan, 4,4'-Diisocyanatodiphenylpropan-(2,2), p-Xylylendiisocyanat und a,a,a' ,a'- Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die -Isocyanatgruppen verknüpfenden Rest enthalten. Beispiele hierfür sind Polyisocyanate, die Carbodiimidgruppen, Allophonatgruppen, Isocyanuratgruppen, Urethangruppen, acylierte Harnstoffgruppen oder Biuretgruppen aufweisen. Bezüglich weiterer geeigneter Polyisocyanate sei beispielsweise auf die DE-Offenlegungsschrift 2 928 552 verwiesen.

Der Anteil an Polyisocyanaten (A) in dem Polyurethanharz liegt in der Regel bei ca. 10 bis 50 Gew.-%, vorzugsweise 25 bis 35 Gew.-%, bezogen auf das Polyurethanharz.

Die Polyole gemäß (B) besitzen vorzugsweise ein mittleres Molekulargewicht $\overline{M}_n$ von 400 bis 5000, insbesondere 800 bis 2000. Ihre Hydroxylzahl beträgt im allgemeinen 30 bis 280, vorzugsweise 50 bis 200 und insbesondere 80 bis 160 mg KOH/g.

Beispiele für derartige Polyole, bei denen es sich um die aus der Polyurethanchemie bekannten Verbindungen handelt, sind Polyetherpolyole, Polyesterpolyole, Polycarbonatpolyole, Polyesteramidpolyole, Polyamidpolyole, Epoxidharzpolyole und deren Umsetzungsprodukte mit $CO_2$, Polyacrylatpolyole udgl.. Derartige Polyole, die auch in Mischung eingesetzt werden können, sind beispielsweise in den DE-Offenlegungsschriften 2 020 905, 2 314 513 und 3 124 784 sowie in der EP-Offenlegungsschrift 120 466 beschrieben.

Von diesen Polyolen sind die Polyether- und Polyesterpolyole bevorzugt, insbesondere solche, die nur endständige OH-Gruppen aufweisen und eine Funktionalität von kleiner als 3, vorzugsweise von 2,8 bis 2 und insbesondere von 2 besitzen.

Als Polyetherpolyole sind hier beispielsweise Polyoxyethylenpolyole, Polyoxypropylenpolyole, Polyoxybutylenpolyole zu nennen und vorzugsweise Polytetrahydrofurane mit endständigen OH-Gruppen.

Die erfindungsgemäß besonders bevorzugten Polyesterpolyole sind die bekannten Polykondensate aus Di- sowie gegebenenfalls Poly(Tri,Tetra)olen und Di- sowie gegebenenfalls Poly(Tri,Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole, wie Polyethylenglykol, weiterhin Propandiol, Butandiol(1,4), Hexandiol(1,6), Neopentylglykol oder Hydroxypivalinsäureneopentylglykolester, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Trimethylolbenzol oder Trishydroxyethylisocyanurat zu nennen.

Als Dicarbonsäuren kommen beispielsweise in Frage: Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, "Chlorendic"-Säure, Tetrachlorphthalsäure, Maleinsäure, Fumarsäure, Itaconsäure, Malonsäure, Korksäure, 2-Methylbernsteinsäure, 3,3-Diäthylglutarsäure, 2,2-Dimethylbernsteinsäure. Anhydride dieser Säuren sind ebenfalls brauchbar, soweit sie existieren. Die Anhydride werden infolgedessen durch den Ausdruck "Säure" mitumfaßt. Es können auch Monocarbonsäuren, wie Benzoesäure und Hexancarbonsäure verwendet werden, vorausgesetzt, daß die mittlere Funktionalität des Polyols höher als 2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Die Hydroxycarbonsäure, die als Reaktionsteilnehmer bei der Herstellung eines Polyesterpolyols mit endständigem Hydroxyl verwendet werden können, sind u.a. beispielsweise Hydroxycapronsäure, Hydroxybuttersäure, Hydroxydecansäure, Hydroxystearinsäure und dergl. Brauchbare Lactone sind u.a. Caprolacton, Butyrolacton und dergl..

Die Menge an Komponente (B) in dem Polyurethanharz liegt üblicherweise zwischen 15 und 80 Gew.-%, vorzugsweise 40 und 60 Gew.-%, bezogen auf das Polyurethanharz.

Die gegebenenfalls zum Aufbau der Polyurethanharze eingesetzten niedermolekularen Polyole (C) bewirken in der Regel eine Versteifung der Polymerkette. Sie besitzen im allgemeinen ein Molekulargewicht von etwa 60 bis 400, vorzugsweise 60 bis 200 und Hydroxylzahlen von beispielsweise 200 bis 1500. Sie können aliphatische, alicyclische oder aromatische Gruppen enthalten. Ihre Menge liegt im allgemeinen bei 0 bis 20, vorzugsweise 1 bis 10 Gew.-%, bezogen auf die Polyolkomponente (B) bis (D). Genannt seien hier beispielsweise die niedermolekularen Polyole mit bis zu etwa 20 Kohlenstoffatomen je Molekül, z.B. Ethylenglykol, Diethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Bisphenol A (2,2-Bis(4-hydroxphenyl)propan), hydriertes Bisphenol A (2,2-Bis(4-hydroxycyclohexyl)propan) sowie deren Mischungen, sowie als Triol, Trimethylolpropan.

Für den Baustein (D) geeignete Verbindungen sind beispielsweise in den US-Patentschriften 3 412 054 und 3 640 924 sowie in den DE-Offenlegungsschriften 2 624 442 und 2 744 544 beschrieben, auf die hier Bezug genommen wird. Insbesondere kommen hierfür solche Polyole, vorzugsweise Diole, in Frage, die wenigstens eine Carboxyl-Gruppe, im allgemeinen 1 bis 3 Carboxyl-Gruppen je Molekül enthalten. Als zur Anionenbildung befähigte Gruppen sind auch Sulfonsäuregruppen geeignet. Beispiele hierfür sind: Dihydroxycarbonsäuren, wie $\alpha,\alpha$-Dialkylolalkansäuren, insbesondere $\alpha,\alpha$-Dimethylolalkansäuren, wie 2,2-Dimethylolessigsäure, 2,2-Dimethylolpropionsäure, 2,2-Dimethylolbuttersäure, 2,2-Dimethylolpentansäure, Dihydroxybernsteinsäure, weiterhin Polyhydroxysäuren, wie Glukonsäure. Besonders bevorzugt ist dabei 2,2-Dimethylolpropionsäure. Aminogruppenhaltige Verbindungen (D) sind beispielsweise $\alpha, \delta$-Diaminovaleriansäure, 2,4-Diamino-toluol-sulfonsäure-(5) udgl.. Es können auch Gemische dieser Verbindungen (D) zum Einsatz kommen. Die Menge an Komponente (D) in dem Polyurethanharz liegt im allgemeinen bei 2 bis 20, vorzugsweise bei 4 bis 10 Gew.-%, bezogen auf das Polyurethanharz.

Das erfindungsgemäß eingesetzte Polyurethanharz enthält weiterhin auch Bausteine (E), die sich überwiegend, vorzugsweise zu 70 bis 90 %, jeweils an den Kettenenden befinden und diese abschließen (Kettenstopper). Als Polyole kommen hier solche in Betracht, die mindestens drei, vorzugsweise 3 oder 4 Hydroxylgruppen aufweisen. Genannt seien hier beispielsweise Glycerin, Hexantriol, Pentaerythrit und Trimethylolpropan, wobei letzteres bevorzugt ist. Die Menge an (E) liegt üblicherweise zwischen 2 und 15, vorzugsweise 5 bis 15 Gew.-%, bezogen auf das Polyurethanharz. Gegebenenfalls finden sich diese Bausteine (E) in Mischung mit den Bausteinen (F) im Polyurethanharz.

Diese Bausteine (F) leiten sich zum einen von monofunktionellen, mit NCO-Gruppen reaktiven Verbindungen ab, wie Monoaminen, insbesondere mono-sekundären Aminen, oder Monoalkoholen. Genannt seien hier beispielsweise: Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignet substituierte Derivate davon, Amidamine aus di-primären Aminen und Monocarbonsäuren, Monoketimine von di-primären Aminen, primär/ tertiäre Amine, wie N,N-Dimethylaminopropylamin udgl..

Vorzugsweise kommen für (F) Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen, oder neben einer OH-Gruppe auch COOH-Gruppen oder neben einer Aminogruppe (primär oder sekundär) auch OH-Gruppen aufweisen, wobei die letzteren bevorzugt sind. Beispiele hierfür sind: primäre/sekundäre Amine, wie 3-Amino-1-Methylaminopropan, 3-Amino-1-Ethylaminopropan, 3-Amino-1-Cyclohexylaminopropan, 3-Amino-1-Methylaminobutan; Mono-Hydroxycarbonsäuren, wie Hydroxyessigsäure, Milchsäure oder Äpfelsäure, weiterhin Alkanolamine wie N-Aminoethylethanolamin, Ethanolamin, 3-Aminopropanol, Neopentanolamin und besonders bevorzugt Diethanolamin.

Auf diese Weise werden zusätzlich funktionelle Gruppen in das polymere Endprodukt eingebracht und dieses damit reaktionsfähiger gegenüber Materialien, wie Härtern, gemacht. Die Menge an (F) in dem Polyurethanharz liegt üblicherweise zwischen 2 und 20, vorzugsweise 3 und 10 Gew.-%, bezogen auf das Polyurethanharz.

Zusätzlich zu den Bausteinen gemäß (E) und (F) kann das erfindungsgemäße Polyurethanharz gegebenenfalls auch noch Bausteine (G) enthalten, die sich von sogenannten Kettenverlängerern ableiten, wenngleich diese Variante weniger bevorzugt ist. Als solche kommen die hierfür bekannten, mit NCO-Gruppen reaktiven und vorzugsweise difunktionellen Verbindungen in Frage, die nicht identisch mit (B), (C), (D), (E) und (F) sind und zumeist mittlere Molekulargewichte bis zu 400 aufweisen. Genannt seien hier beispielsweise Wasser, Hydrazin, Poly(Di)amine, wie Ethylendiamin, Diaminopropan, Hexamethylendiamin, die auch Substituenten, wie OH-Gruppen, tragen können. Solche Polyamine sind beispielsweise in der DE-Offenlegungsschrift 36 44 371 beschrieben. Die Menge an (G) in dem Polyurethanharz liegt üblicherweise zwischen 1 und 10, vorzugsweise 2 und 5 Gew.-%, bezogen auf das Polyurethanharz.

Die Herstellung des erfindungsgemäß eingesetzten Polyurethanharzes erfolgt bevorzugt in der Weise, daß man aus den Polyisocyanaten gemäß (A), den Polyolen gemäß (B) und gegebenenfalls den niedermolekularen Polyolen gemäß (C) sowie den Verbindungen gemäß (D) zunächst ein Polyurethan-Präpolymeres herstellt, das im Mittel mindestens 1,7, vorzugsweise 2 bis 2,5 freie Isocyanatgruppen pro Molekül enthält, dieses Präpolymere dann mit einem stöchiometrischen Überschuß der Verbindungen gemäß (E), gegebenenfalls in Abmischung mit (F) und/oder (G), in nicht-wäßrigem System umsetzt und das vollständig ausreagierte Polyurethanharz vorzugsweise anschließend neutralisiert und ins wäßrige System überführt. Gegebenenfalls kann auch die Umsetzung mit (G) nach der Überführung ins wäßrige System erfolgen.

Die Herstellung des Polyurethan-Präpolymeren erfolgt dabei nach bekannten Verfahren. Hierbei wird das Polyisocyanat gegenüber den Polyolen (B) bis (D) im Überschuß eingesetzt, so daß ein Produkt mit freien Isocyanatgruppen resultiert. Diese Isocyanatgruppen sind end- und/oder seitenständig, vorzugsweise endständig. Zweckmäßigerweise ist dabei die Menge an Polyisocyanat so groß, daß das Äquivalentverhältnis von Isocyanatgruppen zur Gesamtzahl der OH-Gruppen in den Polyolen (B) bis (D) 1,05 bis 1,4, vorzugsweise 1,1 bis 1,3 beträgt.

Die Umsetzung zur Herstellung des Präpolymeren wird normalerweise bei Temperaturen von 60 bis 95°C, vorzugsweise 60 bis 75°C, je nach Reaktivität des eingesetzten Isocyanats, durchgeführt, in der Regel ohne Anwesenheit eines Katalysators, jedoch vorzugsweise in Gegenwart von gegenüber Isocyanaten inaktiven Lösungsmitteln. Hierfür kommen insbesondere solche Lösungsmittel in Betracht, die mit Wasser verträglich sind, wie die weiter unten genannten Ether, Ketone und Ester sowie N-Methylpyrrolidon. Die Menge dieses Lösungsmittels überschreitet zweckmäßigerweise nicht 20 Gew.-%, und liegt vorzugsweise im Bereich von 5 bis 15 Gew.-%, jeweils bezogen auf die Summe aus Polyurethanharz und Lösungsmittel. Zweckmäßigerweise wird dabei das Polyisocyanat der Lösung der übrigen Komponenten langsam zugegeben.

Das Präpolymere bzw. dessen Lösung wird dann mit der Verbindung gemäß (E), gegebenenfalls in Abmischung mit (F) und/oder (G) umgesetzt, wobei die Temperatur zweckmäßigerweise im Bereich von 50 bis 100°C, vorzugsweise zwischen 60 und 90°C liegt, bis der NCO-Gehalt in dem Präpolymeren praktisch auf Null abgesunken ist. Hierzu wird die Verbindung (E), gegebenenfalls zusammen mit (F) und/oder (G), im Überschuß eingesetzt. Die Menge an (E) liegt dabei zweckmäßigerweise so, daß das Äquivalentverhältnis von NCO-Gruppen des vorher gegebenenfalls schon mit Verbindungen gemäß (F) und/oder (G) umgesetzten Präpolymeren zu reaktiven Gruppen von (E) 1:1,1 bis 1:5, vorzugsweise 1:1,5 bis 1:3 beträgt. Die Menge an (F) und/oder (G) kann bei 0 bis 90 %, vorzugsweise 0 bis 20 %, bezogen auf (E) betragen.

Ein Teil der (nicht neutralisierten) COOH-Gruppen, vorzugsweise 5 bis 30 %, kann gegebenenfalls mit difunktionellen mit COOH-Gruppen reaktiven Verbindungen, wie Diepoxyden, umgesetzt werden.

Zur Neutralisation des resultierenden, vorzugsweise COOH-Gruppen enthaltenden Produktes sind insbesondere tertiäre Amine geeignet, z.B. Trialkylamine mit 1 bis 12, vorzugsweise 1 bis 6 C-Atomen in jedem Alkylrest. Beispiele hierfür Trimethylamin, Triethylamin, Methyldiethylamin, Tripropylamin. Die Alkylreste können beispielsweise auch Hydroxylgruppen tragen, wie bei den Dialkylmonoalkanol-, Alkyldialkanol- und Trialkanolaminen. Beispiel hierfür ist Dimethylethanolamin, das bevorzugt als Neutralisationsmittel dient.

Als Neutralisationsmittel sind gegebenenfalls auch anorganische Basen, wie Ammoniak oder Natrium- bzw. Kaliumhydroxid einsetzbar.

Das Neutralisationsmittel wird zumeist im Molverhältnis zu den COOH-Gruppen des Präpolymers von ca. 0,3:1 bis 1,3:1, vorzugsweise von ca. 0,5:1 bis 1:1 eingesetzt.

Die Neutralisation, die in der Regel zwischen Raumtemperatur und 80°C, vorzugsweise 40 bis 80°C erfolgt, kann in beliebiger Weise durchgeführt werden, z.B. so, daß das wasserhaltige Neutralisationsmittel dem Polyurethanharz zugegeben wird oder umgekehrt. Es ist aber auch möglich, daß man zuerst das Neutralisationsmittel dem Polyurethanharz zufügt und danach erst das Wasser. Im allgemeinen erhält man so Festkörpergehalte von 20 bis 70 %, bevorzugt 30 bis 50 %.

Der Gehalt an Polyurethanharz in der wäßrigen Überzugsmasse beträgt im allgemeinen 5 bis 40, vorzugsweise 15 bis 30 Gew.-%, bezogen auf die gesamte Überzugsmasse.

Neben dem Polyurethanharz kann die wäßrige Überzugsmasse als Bindemittel noch bis zu 60, vorzugsweise bis zu 30 Gew.-%, bezogen auf das Polyurethanharz, anderer oligomerer oder polymerer Materialien enthalten, wie vernetzungsfähige, wasserlösliche oder wasserdispergierbare Phenolharze, Polyesterharze, Epoxidharze oder Acrylharze etc., wie beispielsweise in der EP-Offenlegungsschrift 89 497 beschrieben.

Außerdem ist in der erfindungsgemäßen Überzugsmasse üblicherweise überschüssiges Polyol entsprechend (E) vorhanden, zumeist in Mengen von 1 bis 10, vorzugsweise 2 bis 5 Gew.-%, bezogen auf das Polyurethanharz.

Als Vernetzungsmittel sind die für Polyolharze üblichen Härter geeignet, sofern sie wasserverträglich sind. Genannt seien hier beispielsweise wasserverträgliche (wasserlösliche oder wasserdispergierbare) Aminoharze, insbesondere handelsübliche veretherte Melamin-Formaldehyd-Kondensate wie Hexamethoxymethylmelamin, Phenolharze oder blockierte Polyisocyanate wie beispielsweise in der DE-Offenlegungsschrift 36 44 372 beschrieben.

Die Menge an Vernetzungsmittel liegt üblicherweise bei 10 bis 35 Gew.-%, vorzugsweise 15 bis 25 Gew.%, bezogen auf die Summe aus zu vernetzendem Bindemittel und Vernetzer.

Die wäßrige Überzugsmasse gemäß der Erfindung, deren pH-Wert zumeist etwa im Bereich von 6,0 bis 10,0, vorzugsweise 6,8 bis 8,5 liegt, kann noch die üblichen Lackadditive, wie Pigmente und Füllstoffe sowie Lackhilfsmittel, z.B. Antiabsetzmittel, Entschäumungs- und/oder Netzmittel, Verlaufmittel, Reaktiv-Verdünner, Weichmacher, Katalysatoren, Hilfslösemittel, Verdicker undgl. enthalten. Zumindest ein Teil dieser Additive kann der Überzugsmasse erst unmittelbar vor der Verarbeitung zugegeben werden. Die Auswahl und die Dosierung dieser Stoffe, die den Einzelkomponenten und/oder der Gesamtmischung zugegeben werden können, sind dem Fachmann bekannt.

Als Pigmente sind beispielsweise Eisenoxide, Bleioxide, Bleisilikate, Titandioxid, Bariumsulfat, Zinkoxid, Zinksulfid, Phthalocyaninkomplexe etc. zu nennen, und als Füllstoffe Glimmer, Kaolin, Kreide, Quarzmehl, Asbestmehl, Schiefermehl, verschiedene Kieselsäuren, Silikate sowie Talkum, inklusive von sog. Mikrotalkum, mit einer Kornfeinheit von maximal 10 µm (vgl. EP-Offenlegungsschrift 249.727). Diese Pigmente und/oder Füllstoffe werden üblicherweise in Mengen von 10 bis 70, vorzugsweise von 30 bis 50 Gew.-%, bezogen auf den Gesamtfestkörpergehalt der Überzugsmasse, eingesetzt.

Als Katalysatoren kommen hier die üblichen sauren Härtungskatalysatoren in Frage, wie p-Toluolsulfonsäure, Dodecylbenzolsulfonsäure etc.

Die Hilfslösemittel, beispielsweise Ether, wie Dimethyl(diethyl)glykol, Dimethyl(diethyl)diglykol, Tetrahydrofuran, Ketone wie Methylethylketon, Aceton, Cyclohexanon, Ester, wie Butylacetat, Ethylglykolacetat, Methylglykolacetat, Methoxypropylacetat, Alkohole, wie Ethanol, Propanol, Butanol werden, wenn überhaupt, aus Gründen der Umweltfreundlichkeit nur in möglichst geringer Menge verwendet, die in der Regel 10, vorzugsweise 1 bis 5 Gew.%, bezogen auf Wasser (als dem hauptsächlichen Verdünnungsmittel) nicht überschreitet. Die Menge an Wasser in der wäßrigen Überzugsmasse liegt zumeist bei 15 bis 80 Gew.-%, vorzugsweise 30 bis 60 Gew.-%, bezogen auf die gesamte Überzugsmasse.

Die Herstellung der wäßrigen Überzugsmasse erfolgt nach den üblichen Methoden der Lackherstellung, wie beispielsweise aus der weiter unten angegebenen Richtrezeptur ersichtlich.

Der Auftrag der wäßrigen Überzugsmasse, die mit Wasser unendlich verdünnbar sind und deren Gesamtfestkörpergehalt (125° C/2 Std.) im allgemeinen 35 bis 75, vorzugsweise 40 bis 60 Gew.-% beträgt, geschieht in bekannter Weise, beispielsweise durch Spritzen nach dem Druckluftverfahren oder mittels luftloser oder elektrostatischer Spritzverfahren. Zur Härtung der aufgebrachten Schichten werden im allgemeinen Temperaturen von 120 bis 200°C, vorzugsweise 150 bis 170° C, angewendet. Die Härtungsdauer liegt im allgemeinen bei 15 bis 30 Minuten, vorzugsweise 18 bis 20 Minuten.

Die so erhaltenen vernetzten Beschichtungen zeichnen sich insbesondere durch verbesserte Steinschlagfestigkeit bei tiefen Temperaturen (0°C bis -30°C) sowie durch gute Zwischenschichthaftung aus. Außerdem besitzen sie eine gute Reißdehnung, sowie eine ausgezeichnete Schlagzähigkeit. Die Beständigkeit gegen Luftfeuchtigkeit und Lösungsmittel ist ebenfalls sehr gut.

Die nachfolgenden Beispiele erläutern die Erfindung.

Beispiel 1

Aus 235 g eines Polyesters mit dem Molekulargewicht von 840, hergestellt aus Adipinsäure, Hexandiol(1,6) Neopentylglykol und 42,9 g Dimethylolpropionsäure, und 75 g N-Methylpyrrolidon wurde eine Mischung hergestellt und diese auf 100°C erhitzt. Die so erhaltene, klare Lösung wurde auf ca. 60° abgekühlt und anschließend bei dieser Temperatur 121,8 g eines Gemisches aus 2,4- und 2,6-Toluylendiisocyanat so zugetropft, daß die Temperatur 65°C bis 70°C nicht überstieg. Anschließend wurde so lange bei dieser Temperatur gerührt, bis der Isocyanat-Wert 1,6 % (= 2 Isocyanatgruppen pro Molekül) erreicht hatte. Dann wurden 29,5 g Trimethylolpropan zugegeben, wobei das System gut rührbar blieb. Nach Neutralisation mit 22,4 g Dimethylethanolamin wurde das fertige Polyurethanharz durch Zugabe von 590 g deionisiertem Wasser dispergiert. Man erhielt eine klare, ca. 40 %-ige Dispersion mit einer Viskosität von 1500 mPas.

Beispiel 2

235,6 g eines Polyesters mit der Molmasse von 1020, hergestellt aus Adipinsäure, Hexandiol(1,6) und Neopentylglykol wurden mit 56,0 g Polytetrahydrofuran (M= 1000), 42,9 g Dimethylolpropionsäure und 75 g N-Methylpyrrolidon gemischt und auf die in Beispiel 1 beschriebene Weise mit Toluylendiisocyanat (Isomerengemisch) umgesetzt. Nach Reaktion des Prepolymeren mit Glycerin wurde mit 22,8 g Dimethylethanolamin neutralisiert und mit 620 g deionisiertem Wasser dispergiert.

Beispiel 3

317,1 g eines Polyesters mit dem Molekulargewicht von 1130, hergestellt aus Adipinsäure, Hexandiol, Neopentylglykol und Terephthalsäure wurden mit 42,9 g Dimethylolpropionsäure und 90 g N-Methylpyrrolidon gemischt und auf 100°C erhitzt. Nach Abkühlen auf 65°C wurden 183,7 g 4,4'-Diisocyanatodicyclohexylmethan (Desmodur W) zugetropft und der Reaktionsansatz anschließend bei 80°C gehalten, bis der berechnete Isocyanat-Wert von 1,33 % (=2 Isocyanatgruppen pro Molekül) erreicht war. Man gab 80,4 g Trimethylolpropan und anschließend 22,8 g Dimethylethanolamin zu und rührte noch 20 min nach. Dann wurde durch Zugabe von 700 g deionsiertem Wasser das Polyurethan-Harz dispergiert.

Richtrezeptur zur Füllerformulierung

58,0 Teile Bindemittel aus Beispiel 1-3 wurden mit 4,0 Teilen eines handelsüblichen Melamin-Formaldehyd-Kondensats, 13,3 Teilen Titandioxid, 13,2 Teilen Bariumsulfat (Blanc fix micro), 0,1 Teilen Ruß, 11,1 Teilen deionisiertem Wasser sowie 0,3 Teilen der üblichen Lackhilfsmittel in einer Perlmühle dispergiert (20 min, 6000 U/min).

Die Applikation der Füllerzusammensetzung erfolgte mittels Druckluftpistole auf ein mit einer kathodisch abgeschiedenen Elektrotauchgrundierung beschichtetes (ca 30 µm), zinkphosphatiertes Stahlblech. Die Härtung des Füllers wurde im Umluftofen, 10 min bei 80°C, anschließend 20 min bei 160°C (Trockenfilmstärke 35 ± 2 µm) durchgeführt. Auf die Füllerschicht wurde ein handelsüblicher Alkyd-Melamin-Automobillack aufgebracht und 30 min bei 130°C eingebrannt (Trockenfilmstärke ca. 30 ± 5 µm).

Die Prüfergebnisse sind in der nachfolgenden Tabelle 1 zusammengefaßt. Die Beständigkeitseigenschaften der Filme (Lösungsmittel-, Wasserfestigkeit) entsprechen den Praxisanforderungen.

Decklackstand

Glanz und Oberfläche des Decklacks auf den verschiedenen Füllermaterialien wurden subjektiv nach einer Notenskala bewertet (1 = sehr gut, 5 = sehr schlecht).

Steinschlagfestigkeit

Wurde mittels Steinschlag-Prüfgerät nach VDA (Fa. Erichsen, Modell 508) geprüft. Für die vorliegende Prüfung wurde jeweils 1 kg Stahlschrot (kantig, 4 - 5 mm), beschleunigt durch Druckluft (2 bar), auf die Prüfbleche geschossen. Bewertet wurden, anhand von Musterblechen, die Decklackhaftung (0 = keine Abplatzungen vom Füller, 10 = vollständige Enthaftung) und die Durchschläge bis auf das Blech (0 = kein Durchschlag, 10 = sehr viele Durchschläge).

## Tabelle 1

| Beispiel | 1 | 2 | 3 |
|---|---|---|---|
| Decklackstand | 2 - 3 | 2 | 2 |
| Decklackhaftung | | | |
|     + 20° C | 1-2 | 1 | 2 - 3 |
|     - 20° C | 1-2 | 1-2 | 2 - 3 |
| Durchschläge | | | |
|     + 20° C | 1 | 1 | 2 |
|     - 20° C | 1 | 2 | 3 |
| Gitterschnitt | | | |
| (nach DIN 53151) | Gt 0 | Gt 0 | Gt 0 |

## Patentansprüche

**Patentansprüche für folgende Vertragsstaaten : DE, GB, FR, IT, NL, SE, LI, CH, BE, AT, DK**

1. Wäßrige Überzugsmasse zur Herstellung von Grundierungen oder von Füller-Beschichtungen, die mindestens ein wasserdispergierbares Bindemittelharz, sowie Vernetzungsmittel und gegebenenfalls übliche Additive enthält, dadurch gekennzeichnet, daß das wasserdispergierbare Bindemittelharz zumindest teilweise ein Polyurethanharz ist, das erhalten wird durch Umsetzung von

(A) 10 - 50 Gew.-% Polyisocyanaten,

(B) 15 - 80 Gew.-% Polyolen mit einem mittleren Molekulargewicht $M_n$ von mindestens 400,

(C) 0 - 20 Gew.-% niedermolekularen Polyolen,

(D) 2 - 20 Gew.-% Verbindungen, die mindestens zwei gegenüber Isocyanatgruppen reaktive Gruppen und mindestens eine Carboxylat- oder Sulfonsäuregruppe aufweisen,

(E) 2 - 25 Gew.-% Polyolen, mit mindestens drei Hydroxylgruppen, die gegenüber Isocyanatgruppen keine weiteren reaktiven Gruppen tragen, gegebenenfalls

(F) Monoaminen, Monoalkoholen oder Verbindungen, die entweder primäre und sekundäre Aminogrupppen, Hydroxyl- und Carboxylgruppen oder Amino- und Hydroxylgruppen enthalten, und gegebenenfalls

(G) Polyaminen, Wasser oder Hydrazin,

nach einem Verfahren nach Anspruch 14.

2.    Überzugsmasse nach Anspruch 1, dadurch gekennzeichnet, daß die Menge an Polyurethanharz in der wäßrigen Füllerzusammensetzung 5 bis 40 Gew.-%, bezogen auf die gesamte Füllerzusammensetzung, beträgt.

3.    Überzugsmasse nach Anspruch 1 und/oder 2, dadurch gekennzeichnet, daß die wäßrige Füllerzusammensetzung noch mindestens ein weiteres Bindemittel in einer Menge von bis 60 Gew.-%, bezogen auf das Polyurethanharz, enthält.

4.    Überzugsmasse nach mindestens einem der Ansprüche 1 bis 3, dadurch gekennzeichnet, daß sie 10 bis 35 Gew.-%, bezogen auf die Summe an zu vernetzendem Bindemittel und Vernetzer, an wasserverträglichen Aminharzen als Vernetzer enthält.

5.    Überzugsmasse nach mindestens einem der Ansprüche 1 bis 4, dadurch gekennzeichnet, daß das Polyurethanharz ein mittleres Molekulargewicht $\overline{M}_n$ von 2000 bis 6000 aufweist.

6.    Überzugsmasse nach mindestens einem der Ansprüche 1 bis 5, dadurch gekennzeichnet, daß die Hydroxylzahl des Polyurethanharzes bei 30 bis 80 liegt.

7.    Überzugsmasse nach mindestens einem der Ansprüche 1 bis 6, dadurch gekennzeichnet, daß die Menge der Bausteine (A) 10 bis 50 Gew.-%, der Bausteine (B) 15 bis 80 Gew.-%, der Bausteine (C) 0 bis 20 Gew.-%, der Bausteine (D) 2 bis 20 Gew.-% und der Bausteine (E) 2 bis 25 Gew.-%, jeweils bezogen auf das Polyurethanharz, beträgt.

8.    Überzugsmasse nach mindestens einem der Ansprüche 1 bis 7, dadurch gekennzeichnet, daß sich der Baustein (B) von Polyether- oder Polyesterpolyolen mit mittleren Molekulargewichten $\overline{M}_n$ von 400 bis 5000 ableitet.

9.    Überzugsmasse nach mindestens einem der Ansprüche 1 bis 8, dadurch gekennzeichnet, daß es sich bei den Verbindungen gemäß (D) um Polyole handelt, die wenigstens eine Carboxylgruppe enthalten.

10.   Überzugsmasse nach Anspruch 9, dadurch gekennzeichnet, daß (D) eine $\alpha,\alpha$-Dimethylolalkansäure ist.

11.   Überzugsmasse nach mindestens einem der Ansprüche 1 bis 10, dadurch gekennzeichnet, daß es sich bei den Verbindungen gemäß (E) um Glycerin oder Trimethylolpropan handelt.

12.   Überzugsmasse nach mindestens einem der Ansprüche 1 bis 10, dadurch gekennzeichnet, daß es sich bei den Verbindungen gemäß (F) um Monoamine handelt, die noch mindestens eine OH-Gruppe enthalten.

13.   Überzugsmasse nach mindestens einem der Ansprüche 1 bis 12, dadurch gekennzeichnet, daß es sich bei den Verbindungen (G) um Wasser, Hydrazin oder Diamine, die vorzugsweise OH-Gruppen enthalten, handelt.

14.   Verfahren zur Herstellung der Überzugsmasse nach mindestens einem der Ansprüche 1 bis 13, dadurch gekennzeichnet, daß man aus den Polyisocyanaten gemäß (A), den Polyolen gemäß (B) und gegebenenfalls den niedermolekularen Polyolen gemäß (C) sowie den Verbindungen gemäß (D) zunächst ein Polyurethan-Präpolymeres herstellt, das im Mittel mindestens 1,7, vorzugsweise 2 bis 2,5 freie Isocyanatgruppen pro Molekül enthält, dieses Präpolymere dann mit einem Überschuß der Verbindungen gemäß (E), gegebenenfalls im Abmischung mit (F) und/oder (G), in nicht-wäßrigem System umsetzt und das vollständig ausreagierte Polyurethanharz vorzugsweise anschließend neutralisiert und dann ins wäßrige System überführt, wobei die gebenenfalls weiteren Bindemittelharze, das Vernetzungsmittel und die üblichen Addiitive vor, während oder nach der Herstellung des Polyurethanharzes zugegeben werden.

15. Verfahren gemäß Anspruch 14, dadurch gekennzeichnet, daß man die Verbindungen gemäß (E) in einer solchen Menge einsetzt, daß das Äquivalentverhältnis von NCO-Gruppen des vorher gegebenenfalls schon mit Verbindungen gemäß (F) und/oder (G) umgesetzten Präpolymeren zu reaktiven Gruppen von (E) 1:1,1 bis 1:5 beträgt.

16. Verfahren nach Anspruch 14 und/oder 15, dadurch gekennzeichnet, daß die Menge an (F) und/oder (G) 0 bis 90 %, bezogen auf (E), beträgt.

17. Verwendung der Überzugsmasse gemäß mindestens einem der Ansprüche 1 bis 16 zur Herstellung von Grundierungen oder von Füllerbeschichtungen.

18. Substrate, beschichtet mit der Überzugsmasse gemäß mindestens einem der Ansprüche 1 bis 13.

19. Beschichtete Substrate nach Anspruch 18, dadurch gekennzeichnet, daß es sich um Autokarosserien handelt.

**Patentansprüche für folgende Vertragsstaaten : GR, ES**

1. Verfahren zur Herstellung von Überzugsmassen zur Herstellung von Grundierungen oder von Füller-Beschichtungen, die mindestens ein wasserdispergierbares Bindemittelharz, sowie Vernetzungsmittel und gegebenenfalls übliche Additive enthalten, wobei das wasserdispergierbare Bindemittelharz zumindest teilweise ein Polyurethanharz ist, das erhalten wird durch Umsetzung von
   (A) 10 - 50 Gew.-% Polyisocyanaten,
   (B) 15 - 80 Gew.-% Polyolen mit einem mittleren Molekulargewicht $M_n$ von mindestens 400,
   (C) 0 - 20 Gew.-% niedermolekularen Polyolen,
   (D) 2 - 20 Gew.-% Verbindungen, die mindestens zwei gegenüber Isocyanatgruppen reaktive Gruppen und mindestens eine Carboxylat- oder Sulfonsäuregruppe aufweisen,
   (E) 2 - 25 Gew.-% Polyolen, mit mindestens drei Hydroxylgruppen, die gegenüber Isocyanatgruppen keine weiteren reaktiven Gruppen tragen, gegebenenfalls
   (F) Monoaminen, Monoalkoholen oder Verbindungen, die entweder primäre und sekundäre Aminogrupppen, Hydroxyl- und Carboxylgruppen oder Amino- und Hydroxylgruppen enthalten, und gegebenenfalls
   (G) Polyaminen, Wasser oder Hydrazin,
   dadurch gekennzeichnet, daß man aus den Polyisocyanaten gemäß (A), den Polyolen gemäß (B) und gegebenenfalls den niedermolekularen Polyolen gemäß (C) sowie den Verbindungen gemäß (D) zunächst ein Polyurethan-Präpolymeres herstellt, das im Mittel mindestens 1,7, vorzugsweise 2 bis 2,5 freie Isocyanatgruppen pro Molekül enthält, dieses Präpolymere dann mit einem Überschuß der Verbindungen gemäß (E), gegebenenfalls in Abmischung mit (F) und/oder (G), in nicht-wäßrigem System umsetzt und das vollständig ausreagierte Polyurethanharz vorzugsweise anschließend neutralisiert und dann ins wäßrige System überführt, wobei die gegebenenfalls weiteren Bindemittelharze, das Vernetzungsmittel und die üblichen Additive vor, während oder nach der Herstellung des Polyurethanharzes zugegeben werden.

2. Verfahren nach Anspruch 1, dadurch gekennzeichnet, daß die Menge an Polyurethanharz in der wäßrigen Füllerzusammensetzung 5 bis 40 Gew.-%, bezogen auf die gesamte Füllerzusammensetzung beträgt.

3. Verfahren nach Anspruch 1 und/oder 2, dadurch gekennzeichnet, daß die wäßrige Füllerzusammensetzung noch mindestens ein weiteres Bindemittel in einer Menge von bis 60 Gew.-%, bezogen auf das Polyurethanharz, enthält.

4. Verfahren nach mindestens einem der Ansprüche 1 bis 3, dadurch gekennzeichnet, daß die Masse an wasserverträglichen Aminharzen als Vernetzer 10 bis 35 Gew.-%, bezogen auf die Summe an zu vernetzendem Bindemittel und Vernetzer, beträgt.

5. Verfahren nach mindestens einem der Ansprüche 1 bis 4, dadurch gekennzeichnet, daß das Polyurethanharz ein mittleres Molekulargewicht $\overline{M}_n$ von 2000 bis 6000 aufweist.

6. Verfahren nach mindestens einem der Ansprüche 1 bis 5, dadurch gekennzeichnet, daß die Hydroxylzahl des Polyurethanharzes bei 30 bis 80 liegt.

7. Verfahren nach mindestens einem der Ansprüche 1 bis 6, dadurch gekennzeichnet, daß die Menge der Bausteine (A) 10 bis 50 Gew.-%, der Bausteine (B) 15 bis 80 Gew.-%, der Bausteine (C) 0 bis 20 Gew.-%, der Bausteine (D) 2 bis 20 Gew.-% und der Bausteine (E) 2 bis 25 Gew.-%, jeweils bezogen auf das Polyurethanharz, beträgt.

8. Verfahren nach mindestens einem der Ansprüche 1 bis 7, dadurch gekennzeichnet, daß sich der Baustein (B) von Polyether- oder Polyesterpolyolen mit mittleren Molekulargewichten $\overline{M}_n$ von 400 bis 5000 ableitet.

9. Verfahren nach mindestens einem der Ansprüche 1 bis 8, dadurch gekennzeichnet, daß es sich bei den Verbindungen gemäß (D) um Polyole handelt, die wenigstens eine Carboxylgruppe enthalten.

10. Verfahren nach Anspruch 9, dadurch gekennzeichnet, daß (D) eine $\alpha, \alpha$-Dimethylolalkansäure ist.

11. Verfahren nach mindestens einem der Ansprüche 1 bis 10, dadurch gekennzeichnet, daß es sich bei den Verbindungen gemäß (E) um Glycerin oder Trimethylolpropan handelt.

12. Verfahren nach mindestens einem der Ansprüche 1 bis 10, dadurch gekennzeichnet, daß es sich bei den Verbindungen gemäß (F) um Monoamine handelt, die noch mindestens eine OH-Gruppe enthalten.

13. Verfahren nach mindestens einem der Ansprüche 1 bis 12, dadurch gekennzeichnet, daß es sich bei den Verbindungen gemäß (G) um Wasser, Hydrazin oder Diamine, die vorzugsweise OH-Gruppen enthalten, handelt.

14. Verfahren nach einem der Ansprüche 1 bis 13, dadurch gekennzeichnet, daß man die Verbindungen gemäß (E) in einer solchen Menge einsetzt, daß das Äquivalentverhältnis von NCO-Gruppen des vorher gegebenenfalls schon mit Verbindungen gemäß (F) und/oder )G) umgesetzten Präpolymeren zu reaktiven Gruppen von (E) 1:1,1 bis 1:5 beträgt.

15. Verfahren nach einem der Ansprüche 1 bis 14, dadurch gekennzeichnet, daß die Menge an (F) und/oder (G) 0 bis 90 %, bezogen auf (E), beträgt.

16. Verwendung der Überzugsmasse, hergestellt gemäß mindestens einem der Ansprüche 1 bis 15 zur Herstellung von Grundierungen oder von Füllerbeschichtungen.

17. Substrate, beschichtet mit der Überzugsmasse, hergestellt gemäß mindestens einem der Ansprüche 1 bis 16.

18. Beschichtete Substrate nach Anspruch 17, dadurch gekennzeichnet, daß es sich um Autokarosserien handelt.

## Claims

### Claims for the following Contracting States : DE, GB, FR, IT, NL, SE, LI, CH, BE, AT, DK

1. An aqueous coating composition for preparing primers or primer surfacers containing at least one water-dispersible binder resin, and crosslinking agents and, if appropriate, conventional additives, characterized in that at least some of the water-dispersible binder resin is a polyurethane resin obtained by reacting
   (A) 10-50 % by weight of polyisocyanates,
   (B) 15-80 % by weight of polyols having an average molecular weight $\overline{M}_n$ of at least 400,

(C) 0-20 % by weight of low-molecular-weight polyols,

(D) 2-20 % by weight of compounds having at least two groups which are reactive toward isocyanato groups and at least one carboxylate or sulfonic acid group,

(E) 2-25 % by weight of polyols having at least three hydroxyl groups and carrying no further groups which are reactive toward isocyanato groups, if appropriate

(F) monoamines, monoalcohols or compounds which either contain primary and secondary amino groups, hydroxyl and carboxyl groups or amino and hydroxyl groups and, if appropriate,

(G) polyamines, water or hydrazine,

according to a process as claimed in claim 14.

2. A coating composition as claimed in claim 1, characterized in that the amount of polyurethane resin in the aqueous surfacer composition is 5 to 40 % by weight, relative to the entire surfacer composition.

3. A coating composition as claimed in claim 1 and/or 2, characterized in that the aqueous surfacer composition additionally contains at least one further binder in an amount of up to 60 % by weight, relative to the polyurethane resin.

4. A coating composition as claimed in at least one of claims 1 to 3, characterized in that it contains 10 to 35 % by weight, relative to the sum of binder to be crosslinked and crosslinking agent, of water-compatible amino resins as crosslinking agents.

5. A coating composition as claimed in at least one of claims 1 to 4, characterized in that the polyurethane resin has an average molecular weight $\overline{M}_n$ of 2000 to 6000.

6. A coating composition as claimed in at least one of claims 1 to 5, characterized in that the hydroxyl number of the polyurethane resin is 30 to 80.

7. A coating composition as claimed in at least one of claims 1 to 6, characterized in that the amount of building blocks (A) is 10 to 50 % by weight, building blocks (B) 15 to 80 % by weight, building blocks (C) 0 to 20 % by weight, building blocks (D) 2 to 20 % by weight, and building blocks (E) 2 to 25 % by weight, each relative to the polyurethane resin.

8. A coating composition as claimed in at least one of claims 1 to 7, characterized in that building block (B) is derived from polyether or polyester polyols having average molecular weights $\overline{M}_n$ of 400 to 5000.

9. A coating composition as claimed in at least one of of claims 1 to 8, characterized in that the compounds according to (D) are polyols containing at least one carboxyl group.

10. A coating composition as claimed in claim 9, characterized in that (D) is an $\alpha,\alpha$-dimethylolalkanoic acid.

11. A coating composition as claimed in at least one of claims 1 to 10, characterized in that the compounds according to (E) are glycerol or trimethylolpropane.

12. A coating composition as claimed in at least one of claims 1 to 10, characterized in that the compounds according to (F) are monoamines additionally containing at least one OH group.

13. A coating composition as claimed in at least one of claims 1 to 12, characterized in that the compounds (G) are water, hydrazine or diamines which preferably contain OH groups.

14. A process for the preparation of a coating composition as claimed in at least one of claims 1 to 13, characterized in that a polyurethane prepolymer is first prepared from the polyisocyanates according to (A), the polyols according to (B) and, if desired, the low-molecular-weight polyols according to (C) and the compounds according to (D), which prepolymer contains on average at least 1.7, preferably 2 to 2.5, free isocyanato groups per molecule, this prepolymer is then reacted with an excess of the compounds according to (E), if desired in a mixture with (F) and/or (G), in a non-aqueous system, and the completely reacted polyurethane resin is then preferably neutralized and thereafter transferred into an aqueous system, the further binder resins, if used, the crosslinking agent and the conventional additives being added before, during, or after the preparation of the polyurethane resin.

15. The process as claimed in claim 14, characterized in that the compounds according to (E) are used in

EP 0 436 941 B1

such an amount that the equivalent ratio of NCO groups of the prepolymer, which previously may already have been reacted with the compounds according to (F) and/or (G), to reactive groups of (E) is 1:1.1 to 1:5.

16. The process as claimed in claim 14 and/or 15, characterized in that the amount of (F) and/or (G) is 0 to 90 %, relative to (E).

17. Use of a coating composition as claimed in at least one of claims 1 to 16 for preparing primers or primer surfacers.

18. Substrates coated with a coating composition as claimed in at least one of claims 1 to 13.

19. Coated substrates as claimed in claim 18, characterized in that the substrates are automotive bodies.

**Claims for the following Contracting States : GR, ES**

1. A process for the preparation of coating compositions for preparing primers or primer surfacers containing at least one water-dispersible binder resin, and crosslinking agents and, if appropriate, conventional additives, with at least some of the water-dispersible binder resin being a polyurethane resin obtained by reacting
   (A) 10-50 % by weight of polyisocyanates,
   (B) 15-80 % by weight of polyols having an average molecular weight $M_n$ of at least 400,
   (C) 0-20 % by weight of low-molecular-weight polyols,
   (D) 2-20 % by weight of compounds having at least two groups which are reactive toward isocyanato groups and at least one carboxylate or sulfonic acid group,
   (E) 2-25 % by weight of polyols having at least three hydroxyl groups and carrying no further groups which are reactive toward isocyanato groups, if appropriate
   (F) monoamines, monoalcohols or compounds which either contain primary and secondary amino groups, hydroxyl and carboxyl groups or amino and hydroxyl groups and, if appropriate,
   (G) polyamines, water or hydrazine,
   characterized in that a polyurethane prepolymer is first prepared from the polyisocyanates according to (A), the polyols according to (B) and, if desired, the low-molecular-weight polyols according to (C) and the compounds according to (D), which prepolymer contains on average at least 1.7, preferably 2 to 2.5, free isocyanato groups per molecule, this prepolymer is then reacted with an excess of the compounds according to (E), if desired in a mixture with (F) and/or (G), in a non-aqueous system, and the completely reacted polyurethane resin is then preferably neutralized and thereafter transferred into an aqueous system, the further binder resins, if used, the crosslinking agent and the conventional additives being added before, during, or after the preparation of the polyurethane resin.

2. A process as claimed in claim 1, characterized in that the amount of polyurethane resin in the aqueous surfacer composition is 5 to 40 % by weight, relative to the entire surfacer composition.

3. A process as claimed in claim 1 and/or 2, characterized in that the aqueous surfacer composition additionally contains at least one further binder in an amount of up to 60 % by weight, relative to the polyurethane resin.

4. A process as claimed in at least one of claims 1 to 3, characterized in that the composition contains 10 to 35 % by weight, relative to the sum of binder to be crosslinked and crosslinking agent, of water-compatible amino resins as crosslinking agents.

5. A process as claimed in at least one of claims 1 to 4, characterized in that the polyurethane resin has an average molecular weight $\overline{M}_n$ of 2000 to 6000.

6. A process as claimed in at least one of claims 1 to 5, characterized in that the hydroxyl number of the polyurethane resin is 30 to 80.

7. A process as claimed in at least one of claims 1 to 6, characterized in that the amount of building blocks (A) is 10 to 50 % by weight, building blocks (B) 15 to 80 % by weight, building blocks (C) 0 to 20 % by weight, building blocks (D) 2 to 20 % by weight, and building blocks (E) 2 to 25 % by weight, each relative

12

to the polyurethane resin.

8.   A process as claimed in at least one of claims 1 to 7, characterized in that building block (B) is derived from polyether or polyester polyols having average molecular weights $\overline{M}_n$ of 400 to 5000.

9.   A process as claimed in at least one of of claims 1 to 8, characterized in that the compounds according to (D) are polyols containing at least one carboxyl group.

10.  A process as claimed in claim 9, characterized in that (D) is an $\alpha,\alpha$-dimethylolalkanoic acid.

11.  A process as claimed in at least one of claims 1 to 10, characterized in that the compounds according to (E) are glycerol or trimethylolpropane.

12.  A process as claimed in at least one of claims 1 to 10, characterized in that the compounds according to (F) are monoamines additionally containing at least one OH group.

13.  A process as claimed in at least one of claims 1 to 12, characterized in that the compounds according to (G) are water, hydrazine or diamines which preferably contain OH groups.

14.  A process as claimed in any of claims 1 to 13, characterized in that the compounds according to (E) are used in such an amount that the equivalent ratio of NCO groups of the prepolymer, which previously may already have been reacted with the compounds according to (F) and/or (G), to reactive groups of (E) is 1:1.1 to 1:5.

15.  A process as claimed in any of claims 1 to 14, characterized in that the amount of (F) and/or (G) is 0 to 90 %, relative to (E).

16.  Use of a coating composition prepared as claimed in at least one of claims 1 to 15 for preparing primers or primer surfacers.

17.  Substrates coated with a coating composition prepared as claimed in at least one of claims 1 to 16.

18.  Coated substrates as claimed in claim 17, characetrized in that the substrates are automotive bodies.


**Revendications**

**Revendications pour les Etats contractants suivants : DE, GB, FR, IT, NL, SE, LI, CH, BE, AT, DK**

1.   Masses de revêtement aqueuses pour la préparation de couches de fond ou d'aprêt ou pour la préparation de couches et revêtements intermédiaires, qui contiennent au moins une résine liante dispersible dans l'eau, ainsi qu'un agent réticulant et éventuellement des additifs classiques, **caractérisées** en ce que la résine liante dispersible dans l'eau consiste au moins en partie en une résine de polyuréthane, qui est obtenue par réaction de :
     (A) 10 - 50 % en poids de polyisocyanates,
     (B) 15 - 80 % en poids de polyols présentant un poids moléculaire moyen $M_n$ d'au moins 400,
     (C) 0 - 20 % en poids de polyols de bas poids moléculaire,
     (D) 2 - 20 % en poids de composés qui contiennent au moins deux groupes réactifs vis à vis des groupes isocyanate et au moins un groupe carboxylate ou un groupe d'acide sulfonique,
     (E) 2 - 25 % en poids de polyols avec au moins trois groupes hydroxy, et qui ne portent pas d'autres groupes supplémentaires réactifs vis à vis des groupes isocyanate, éventuellement
     (F) des monoamines, des monoalcools ou des composés qui contiennent soit des groupes amino primaires soit secondaires, des groupes hydroxy et carboxy ou des groupes amino et hydroxy, et éventuellement
     (G) des polyamines, de l'eau ou de l'hydrazine,
     selon un procédé selon la revendication 14.

2.   Masses de revêtement selon la revendication 1, **caractérisées** en ce que la proportion en résine de polyuréthane dans la composition aqueuse pour couche intermédiaire représente de 5 à 40 % en poids par rapport à la composition totale de couche intermédiaire.

3. Masses de revêtement selon la revendication 1 et/ou 2, **caractérisées** en ce que la composition aqueuse pour couche intermédiaire contient encore au moins un liant supplémentaire en une proportion pouvant atteindre jusqu'à 60 % en poids par rapport à la résine de polyuréthane.

4. Masses de revêtement selon au moins l'une des revendications 1 à 3, **caractérisées** en ce qu'elles contiennent de 10 à 35 % en poids, par rapport à la somme du réticulant et du liant à réticuler, de résines de type amine, compatibles avec l'eau, en tant que réticulant.

5. Masses de revêtement selon au moins l'une des revendications 1 à 4, **caractérisées** en ce que la résine de polyuréthane présente un poids moléculaire moyen $\overline{M}_n$ de 2.000 à 6.000.

6. Masses de revêtement selon au moins l'une des revendications 1 à 5, **caractérisées** en ce que l'indice d'hydroxy de la résine de polyuréthane se situe entre 30 et 80.

7. Masses de revêtement selon au moins l'une des revendications 1 à 6, **caractérisées** en ce que la proportion du motif (A) représente de 10 à 50 % en poids, celle du motif (B) de 15 à 80 % en poids, celle du motif (C) de 0 à 20 % en poids, celle du motif (D) de 2 à 20 % en poids, et celle du motif (E) de 2 à 25 % en poids, dans tous les cas rapporté à la résine de polyuréthane.

8. Masses de revêtement selon au moins l'une des revendications 1 à 7, **caractérisées** en ce que le motif (B) provient de polyéther- ou de polyesterpolyols présentant des poids moléculaires moyens $\overline{M}_n$ de 400 à 5.000.

9. Masses de revêtement selon au moins l'une des revendications 1 à 8, **caractérisées** en ce que, en ce qui concerne les composés selon (D), il s'agit de polyols qui contiennent au moins un groupe carboxy.

10. Masses de revêtement selon la revendication 9, **caractérisées** en ce que (D) est un acide $\alpha$, $\alpha$-diméthylolalkanoïque.

11. Masses de revêtement selon au moins l'une des revendications 1 à 10, **caractérisées** en ce que, en ce qui concerne les composés selon (E), il s'agit de glycérol ou de triméthylolpropane.

12. Masses de revêtement selon au moins l'une des revendications 1 à 10, **caractérisées** en ce que, en ce qui concerne les composés selon (F), il s'agit de monoamines qui contiennent encore au moins un groupe OH.

13. Masses de revêtement selon au moins l'une des revendications 1 à 12, **caractérisées** en ce que, en ce qui concerne les composés selon (G), il s'agit d'eau, d'hydrazine, ou de diamines qui contiennent de préférence des groupes OH.

14. Procédé de préparation des masses de revêtement selon au moins l'une des revendications 1 à 13, **caractérisé** en ce que l'on prépare tout d'abord un prépolymère de polyuréthane, à partir des polyisocyanates selon (A), des polyols selon (B), et éventuellement des polyols de bas poids moléculaire selon (C), et des composés selon (D), qui contient en moyenne au moins 1,7, de préférence de 2 à 2,5 groupes isocyanate libres par molécule, puis on fait réagir ce prépolymère sur un excès des composés selon (E), éventuellement en mélange avec (F) et/ou (G), dans un système non aqueux, et on neutralise ensuite, de préférence, la résine de polyuréthane qui a totalement réagi, puis on la transfère dans un système aqueux, les résines liantes, l'agent réticulant, et les autres additifs classiques, que l'on utilise éventuellement en complément, étant ajoutés avant, pendant ou après la préparation de la résine de polyuréthane.

15. Procédé selon la revendication 14, **caractérisé** en ce que les composés selon (E) sont introduits en proportions telles que le rapport d'équivalent des groupes NCO du prépolymère ayant déjà réagi éventuellement, au préalable, avec les composés selon (F) et/ou (G), par rapport aux groupes réactifs de (E), s'élève à une valeur de 1 : 1,1 à 1 : 5.

16. Procédé selon la revendication 14 et/ou 15, **caractérisé** en ce que la proportion de (F) et/ou (G) représente de 0 à 90 %, par rapport à (E).

**17.** Utilisation des masses de revêtement selon au moins l'une des revendications 1 à 16, pour la fabrication de couches de fond ou d'aprêt ou de couches intermédiaires.

**18.** Substrats revêtus par les masses de revêtement selon au moins l'une des revendications 1 à 13.

**19.** Substrats revêtus selon la revendication 18, **caractérisés** en ce qu'il s'agit de carrosseries de véhicules automobiles.

**Revendications pour les Etats contractants suivants : GR, ES**

**1.** Procédé de préparation de masses de revêtement pour la préparation de couches de fond ou d'aprêt, ou de couches intermédiaires, contenant au moins une résine liante dispersible dans l'eau, ainsi qu'un agent réticulant et éventuellement des additifs classiques, selon lequel la résine liante dispersible dans l'eau consiste au moins en partie en une résine de polyuréthane qui est obtenue par réaction de :

(A) 10 - 50 % en poids de polyisocyanates,

(B) 15 - 80 % en poids de polyols présentant un poids moléculaire moyen $M_n$ d'au moins 400,

(C) 0 - 20 % en poids de polyols de bas poids moléculaire,

(D) 2 - 20 % en poids de composés qui présentent au moins deux groupes réactifs vis à vis des groupes isocyanate et au moins un groupe carboxylate ou un groupe d'acide sulfonique,

(E) 2 - 25 % en poids de polyols avec au moins trois groupes hydroxy, et qui ne portent pas d'autres groupes supplémentaires réactifs vis à vis des groupes isocyanate, et éventuellement

(F) des monoamines, des monoalcools ou des composés qui contiennent des groupes amino soit primaires soit secondaires, des groupes hydroxy et des groupes carboxy ou des groupes amino et des groupes hydroxy, et éventuellement

(G) des polyamines, de l'eau ou de l'hydrazine,

**caractérisé** en ce que l'on prépare tout d'abord un prépolymère de polyuréthane à partir des polyisocyanates selon (A), des polyols selon (B), et éventuellement à partir des polyols de bas poids moléculaire selon (C) ainsi que des composés selon (D) , qui contient en moyenne au moins 1,7, de préférence 2 à 2,5 groupes isocyanate libres par molécule, on fait réagir ce prépolymère, ensuite, sur un excès des composés selon (E), éventuellement en mélange avec (F) et/ou (G), dans un système non aqueux, puis on neutralise de préférence la résine de polyuréthane qui a totalement réagi, et on la transfère ensuite dans un système aqueux, les résines liantes, agents réticulants et autres additifs classiques que l'on a éventuellement utilisés, étant ajoutés avant, durant ou après la préparation de la résine de polyuréthane.

**2.** Procédé selon la revendication 1, **caractérisé** en ce que la proportion de résine de polyuréthane dans la composition aqueuse pour couche intermédiaire est de 5 à 40 % en poids, par rapport à la composition totale de la couche intermédiaire.

**3.** Procédé selon la revendication 1 et/ou 2, **caractérisé** en ce que la composition aqueuse pour couche intermédiaire contient encore au moins un autre liant en proportion pouvant atteindre jusqu'à 60 % en poids, par rapport à la résine de polyuréthane.

**4.** Procédé selon au moins l'une des revendications 1 à 3, **caractérisé** en ce que la masse contient comme réticulant une résine de type amine, compatible avec l'eau, en proportion de 10 à 35 % en poids, par rapport à la somme du liant à réticuler et du réticulant.

**5.** Procédé selon au moins l'une des revendications 1 à 4, **caractérisé** en ce que la résine de polyuréthane présente un poids moléculaire moyen $\overline{M}_n$ de 2.000 à 6.000.

**6.** Procédé selon au moins l'une des revendications 1 à 5, **caractérisé** en ce que l'indice d'hydroxy de la résine de polyuréthane se situe entre 30 et 80.

**7.** Procédé selon au moins l'une des revendications 1 à 6, **caractérisé** en ce que la proportion des motifs (A) représente de 10 à 50 % en poids, des motifs (B) représente de 15 à 80 % en poids, des motifs (C) représente de 0 à 20 % en poids, des motifs (D) représente de 2 à 20 % en poids, et des motifs (E) représente de 2 à 25 % en poids, dans tous les cas rapporté à la résine de polyuréthane.

**8.** Procédé selon au moins l'une des revendications 1 à 7, **caractérisé** en ce que le motif (B) provient de polyéther ou de polyesterpolyols présentant des poids moléculaires moyens $\overline{M}_n$ de 400 à 5.000.

9. Procédé selon au moins l'une des revendications 1 à 8, **caractérisé** en ce que, en ce qui concerne les composés selon (D), il s'agit de polyols qui contiennent au moins un groupe carboxy.

10. Procédé selon la revendication 9, **caractérisé** en ce que (D) est un acide $\alpha$, $\alpha$-diméthylolalkanoïque.

11. Procédé selon au moins l'une des revendications 1 à 10, **caractérisé** en ce que, en ce qui concerne les composés selon (E), il s'agit du glycérol ou du triméthylolpropane.

12. Procédé selon au moins l'une des revendications 1 à 10, **caractérisé** en ce que, en ce qui concerne les composés selon (F) , il s'agit de monoamines qui contiennent encore au moins un groupe OH.

13. Procédé selon au moins l'une des revendications 1 à 12, **caractérisé** en ce que, en ce qui concerne les composés selon (G), il s'agit de l'eau, de l'hydrazine, ou de diamines qui contiennent de préférence des groupes OH.

14. Procédé selon l'une des revendications 1 à 13, **caractérisé** en ce que les composés selon (E) sont introduits en quantité telle que le rapport d'équivalent des groupes NCO du prépolymère ayant déjà préalablement réagi, éventuellement, sur les composés selon (F) et/ou (G), par rapport aux groupes réactifs de (E), s'élève à une valeur de 1 : 1,1 à 1 : 5.

15. Procédé selon l'une des revendications 1 à 14, **caractérisé** en ce que la proportion de (F) et/ou (G) représente de 0 à 90 %, par rapport à (E).

16. Utilisation des masses de revêtement préparées selon au moins l'une des revendications 1 à 15, pour la préparation de couches de fond ou d'aprêt ou de couches intermédiaires.

17. Substrats revêtus par les masses de revêtement préparées selon au moins l'une des revendications 1 à 16.

18. Substrats revêtus selon la revendication 17, **caractérisés** en ce qu'il s'agit de carrosseries de véhicules automobiles.